# EUROPÄISCHE PATENTSCHRIFT

(11) **EP 2 588 503 B1**
(45) Veröffentlichungstag und Bekanntmachung des Hinweises auf die Patenterteilung: **21.05.2014**
(21) Anmeldenummer: 11745920.6
(22) Anmeldetag: 29.06.2011
(51) Int. Cl.: B01J 3/00, B01J 8/00, C08F 6/12

(54) **VERFAHREN ZUR THERMISCHEN TRENNUNG EINER LÖSUNG BESTEHEND AUS THERMOPLASTISCHEM POLYMER UND LÖSUNGSMITTEL**
PROCESS FOR THERMAL SEPARATION OF A SOLUTION CONSISTING OF THERMOPLASTIC POLYMER AND SOLVENT
PROCÉDÉ DE SÉPARATION THERMIQUE D'UNE SOLUTION CONSTITUÉE D'UN POLYMÈRE THERMOPLASTIQUE ET D'UN SOLVANT

(30) Priorität: 03.11.2010 DE 102010060320; 30.06.2010 DE 102010017653
(43) Veröffentlichungstag der Anmeldung: 08.05.2013
(73) Patentinhaber: LIST Holding AG, 4422 Arisdorf (CH)
(72) Erfinder: WITTE, Daniel, Dr., 79639 Grenzach-Wyhlen (DE); ISENSCHMID,Thomas, CH-4312 Magden (CH); STEINER, Manuel, CH-4054 Basel (CH)
(74) Vertreter: Arat, Dogan
(86) Internationale Anmeldenummer: PCT/EP2011/003193
(87) Internationale Veröffentlichungsnummer: WO 2012/000658

(56) Entgegenhaltungen:
- DE-A1-102005 001 802
- US-A1- 2009 163 642

## Beschreibung

Die Erfindung betrifft ein Verfahren zur thermischen Trennung einer Lösung aus thermoplastischen Polymer und Lösungsmittel, bei dem die Lösung unter Druck oberhalb des kritischen Punktes des Lösungsmittels aufgeheizt und danach in einen Behälter entspannt wird, so dass sich eine polymerreiche Phase und eine polymerarme Phase bildet, wobei die polymerreiche Phase einem zweiten Behälter zugeführt wird.

### Stand der Technik

Die beschriebene Erfindung stellt eine Verbesserung eines bestehenden Verfahrens zur thermischen Abtrennung von Lösungsmitteln von thermoplastischen Kunstoffen, insbesondere Elastomeren dar. Die US 3 726 843 beschreibt ein solches Verfahren für die Abtrennung von einem Alkan, insbesondere Hexan, von EPDM (Ethylen-Propylen-Dien-Kautschuk). Die US 6 881 800 beschreibt ein ähnliches Verfahren mit dem Unterschied, dass die thermodynamischen Zustände eindeutiger in der US 3 726 843 dargelegt sind. Diese Verfahren basieren auf ähnlichen Trenntechniken von Polyethylen oder Polypropylen von Hexan, die schon länger industriell genutzt werden.

Der grundsätzliche Vorteil der erwähnten Verfahren ist, dass das Polymer während der Prozessschritte immer gelöst, schmelzförmig oder eine schmelzförmige Paste ist. Dies erreicht man im Polymerisationsschritt durch Zusatz eines Alkans zum Monomergemisch. Die Monomere werden unter einem bestimmten Druck in Hexan zu hohen Umsatzgraden polymerisiert. Die Lösung wird dann eventuell zusätzlich verdichtet und auf eine bestimmte Temperatur indirekt in einem oder mehreren Wärmetauschern erhitzt, wobei der Druck so gewählt sein muss, dass das Polymer immer gut im Lösungsmittel lösbar bleibt, um Belagbildung im Wärmetauscher zu vermeiden. In einem industrialisierten Beispiel für Hexan als Lösungsmittel ist der erforderliche Druck um die 50 bis 80 barü und die erforderliche Temperatur 220 bis 240° C. Die Lösung wird nun in einem Separator auf 20 bis 30 bar entspannt, wobei sich im leicht überkritischen Bereich eine polymerhaltige und eine leichtere polymerarme Phase bildet. Diese können nun über den Dichteunterschied getrennt werden. Der Temperaturabfall in diesem Drucksprung ist gering, da im überkritischen Bereich keine Verdampfungsenthalpie vorhanden ist. Die Wärme der abgetrennten polymerarmen Phase ist daher für die Aufheizung des Eduktes nutzbar, was einen wesentlichen verfahrenstechnischen Vorteil darstellt. Die resultierende polymerreiche Phase wird in einem statischen Flashbehälter weiter auf Drücke zwischen 1 barü und 10 barü entspannt, wobei der Druck so gewählt wird, dass der Fläsh möglichst vollständig ist, aber der polymerhaltige Sumpf schmelzförmig bleibt. Der Sumpf kann dann über eine Polymerpumpe oder ein Ventil einem Entgasungsextruder oder -kneter zugeführt werden, wo verbleibende Lösungsmittel- und Monomerreste unter absolutem oder partiellem Vakuum entfernt werden.

Voraussetzung, dass oben beschriebenes Verfahren funktioniert, ist, dass ein ausreichendes Enthalpiegefälle vorhanden ist, dass das Polymer nach der Entspannung in den zwei Separatoren oder im Einzug im Entgaser schmelzförmig bleibt. Dies limitiert dieses Verfahren, da es viele Polymere gibt, bei denen die maximale Temperatur vor einer thermischen Zersetzung unterhalb des Bereichs 220 bis 240 °C ist. Es wäre denkbar ein niedermolekulares Lösungsmittel oder das Monomer als Lösungsmittel zu benutzen (falls eine eingeschränkte Löslichkeit des Polymers im Monomer vorhanden ist), aber die Flashstufe führt dann zu Temperaturen, die weit unterhalb des Schmelzpunktes liegen. Diese Problematik ist u.a. bei Polystyrolen oder Polybutadienen der Fall. Polybutadien ist kein Thermoplast, hat aber ein schmelzförmiges Verhalten über einen sehr beschränkten Temperaturbereich. Auch steigt der Schmelzpunkt mit zunehmendem Molekulargewicht und für Copolymere. Dies führt im Entgaser zu hohen Drehmomenten, Finesbildung und reduzierten Leistungen für höhermolekulare EPDMs.

Ein weiterer Nachteil des bestehenden Verfahrens ist, dass der Abzug des polymerreichen Sumpfes aus dem Flashbehälter gravimetrisch erfolgt. Ist die Viskosität des Sumpfes zu hoch, führt der Druckverlust der Strömung zu Drücken, die zu einer starken Kavitation des Sumpfes führen. Hierdurch wird die Förderleistung der gespiesenen Pumpe effektiv limitiert. Bei hochmolekularen Produkten wurde beobachtet, dass der auf den Flashbehälter folgende Entgaser Betriebsprobleme aufweist, da die Temperatur des Sumpfes aus dem Flashbehälter durch den Drucksprung sinkt und das Produkt zum Verfestigen neigt. Das Produkt wird dann durch die Welle in Partikel zerrieben, die die Brüdenleitungen verstopfen können. Da der Wärmeübergang der Heizwände des Entgasers gerade bei hochmolekularen Produkten schlecht ist, wird ein erheblicher Teil des Volumens benötigt, die Polymerpartikel oberhalb des Plastifizierungsbereiches zu erhitzen, ab welchem die Welle genügend Drehmoment aufbaut, das Produkt durch mechanischen Energieeintrag zu erhitzen. Dadurch wird die Entgasungsleistung des Entgasers gerade bei Grossanlagen wesentlich reduziert, da das Oberflächen zu Volumenverhältnis mit zunehmender Apparategrösse ungünstiger wird. Dazu kommt, dass die Partikel zwar eine grosse Oberfläche aufweisen, aber nicht dynamisch ihre Oberfläche austauschen, wie es in einer Schmelze der Fall ist. Dadurch wird die Entgasungsleistung zusätzlich eingeschränkt.

### Aufgabe

Aufgabe der vorliegenden Erfindung ist die Verbesserung eines thermischen Trennverfahren für Polymer- von Lösungsmittel bei hochmolekulare Produkte und thermosensitive Polymere im Hinblick auf ein höheres Molekulargewicht, geringere Finesbildung im Entgaser, höhere Kapazität, tiefere Restgehalte an nicht erwünschten flüchtigen Substanzen im Produkt des Entgasers und niedrigeren Energieverbrauch im Vergleich zu bestehenden Verfahren.

### Lösung der Aufgabe

### Zur Lösung der Aufgabe führt, dass

a) ein Drucksprung beim Eintritt in den zweiten Behälter zu einem thermischen Flash in dem zweiten Behälter führt, wobei der Polymeranteil der polymerreichen Phase auf mindestens 70 %, insbesondere mehr als 80 % steigt, und
b) die resultierende polymerreiche Lösung - insbesondere über zumindest einen Teil der Länge einer Rührwelle verteilt - zugeführt wird, die sich im gleichen Behälterraum befindet und die durch mechanische Knetenergie die Polymermasse aufheizt und dadurch bewirkt, dass der Polymeranteil auf über >70 insbesondere >90% steigt.

Um oben genanntes Verfahren zu verbessern, wird erfindungsgemäss vorgeschlagen, dass der Flashbehälter mit einem Mischer, welcher z.B. ein horizontaler Kneter ist, ersetzt wird. Die geflashte Lösung oder Suspension wird über die Länge des Kneters auf ein heisseres Bett verteilt und eingeknetet. Dies kann über eine oder mehrere Feedstellen realisiert werden.

Das Einkneten einer Substanz in ein Knetbett wird verfahrentechnisch als eine Rückmischung bezeichnet. Die Rückmischung führt dazu, dass das Rührbett eine höhere Temperatur oder niedrigere Lösungsmittelkonzentration als der zugeführte Strom haben kann. Durch die Knetenergie wird die für die Temperaturerhöhung und zusätzliche Verdampfungsleistung benötigte Energie durch die dissipierte Leistung der Knetwelle zugeführt. Der Produktraum wird, ähnlich wie der ersetzte Flashbehälter unter Überdruck betrieben, um die Brüdengasgeschwindigkeit über die erhöhte Dichte zu limitieren.

Da der Kneter aber in der Lage ist, auch hochviskose Produkte durch Zwangsförderung effektiv auszutragen, fällt die Limitierung des Austrags des bestehenden Verfahrens (Speisung der Austragspumpe) weg. Der Austrag wird durch die Geometrie der Rühr- oder Kneterwelle und / oder Einbauten realisiert, wobei diese eine Austragspumpe oder-schnecke anspeisen.

Auf die Austragsschnecke kann eine Pumpe (z.B. Zahnradpumpe) folgen, um die Austragsmenge besser kontrollieren zu können. Durch den Einknetvorgang wird die Trennung des Sumpfes von verdampften flüchtigen Stoffen verbessert, da entstehender Schaum eingeknetet und damit mechanisch zerstört wird. Das Lösungsmittelgleichgewicht des Sumpfes verschiebt sich zugunsten eines höheren Feststoffgehaltes durch die höhere Temperatur. Damit wird die Abtrennleistung dieser Prozessstufe erhöht und die der folgenden Entgasungsstufe entlastet.

Die Leistungsaufnahme der Entgasungsstufe wird ebenfalls kleiner, da das Produkt nun stärker überhitzt zugeführt wird. Diese Überhitzung führt zu einer effektiveren Entgasung im Eintragsbereich des Entgasers und daher zu einer besseren Entgasungsleistung bei gleichem Energieeintrag. Die höhere Feedtemperatur wird erfindungsgemäss so gewählt, dass das Produkt im Entgaser sich nicht verfestigt und damit keine Granulierung des Produktes stattfindet. Die erforderliche Grösse des Entgasers kann daher substanziell kleiner sein, was die zusätzlichen Investitionskosten für den Flashkneter im Vergleich zum statischen Flashbehälter kompensiert.

In einer Variante des Verfahrens wird flüssiges Strippmittel über die Länge des Entgasers zugeführt. Der Druck im Entgaser wird so gewählt, dass das Strippmittel verdampft, durch Blasenbildung den Stoffaustausch verbessert und das resultierende Strippgas zu einem niedrigeren Partialdruck der anderen flüchtigen Substanzen führt. Erfindungsgemäss kann die Menge des Strippmittels, die zugeführt wird, so gewählt werden, um eine bestimmte Temperatur der Polymermasse zu halten. Damit kann die Verweilzeit im Entgaser beliebig angepasst werden, da das Polymer niemals überhitzen kann. Die Restgehalte an unerwünschten flüchtigen Substanzen werden durch alle die erfindungsgemässen Massnamen wesentlich reduziert bzw. die mögliche Kapazität des Entgasers wesentlich erhöht.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine blockschaltbildliche, schematische Darstellung eines Verfahrens nach dem bekannten Stand der Technik;
**Figur 2** eine blockschaltbildliche, schematische Darstellung des erfindungsgemässen Verfahrens.

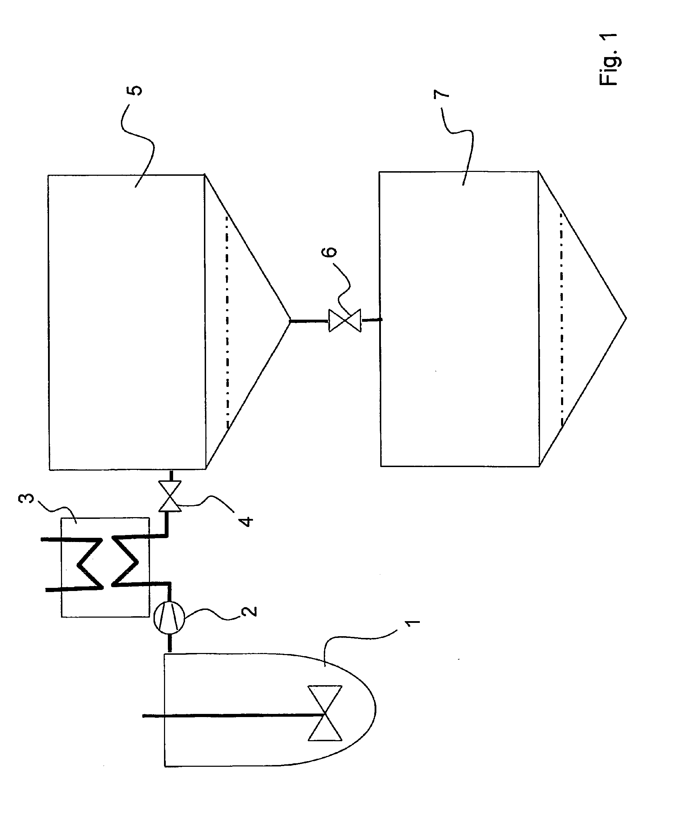

Nach dem Stand der Technik gemäss Figur 1 wird ein Monomer und ein Lösungsmittel in einen Rührkessel 1 eingeführt, in dem die Polymerisation stattfindet. Diese Lösung gelangt mittels einer Pumpe 2 durch einen Wärmetauscher 3 und ein Ventil 4 in einen Hochdruckseparator 5 durch eine Entspannungsdüse. In dem Hochdruckseparator 5 erfolgt ein Aufheizen der Lösung oberhalb des kritischen Punktes des Lösungsmittels (das ist der Punkt, wo es keine Gasphase mehr gibt, wo nichts mehr verdampfen kann) und es bildet sich eine polymerreiche und eine polymerarme Phase. Das Lösemittel und die polymerarme Phase gelangt zurück zur Polymerisation in den Rührkessel 1.

Die polymerreiche Phase wird dann wiederum über eine Entspannungsdüse und ein Ventil 6 einem Niedrigdruckseparator 7 zugeführt, der ungerührt ist. Aus dem Niedrigdruckseparator 7 gelangt die Lösung zu einem Finisher bzw. das Lösemittel zu einem Kondensator.

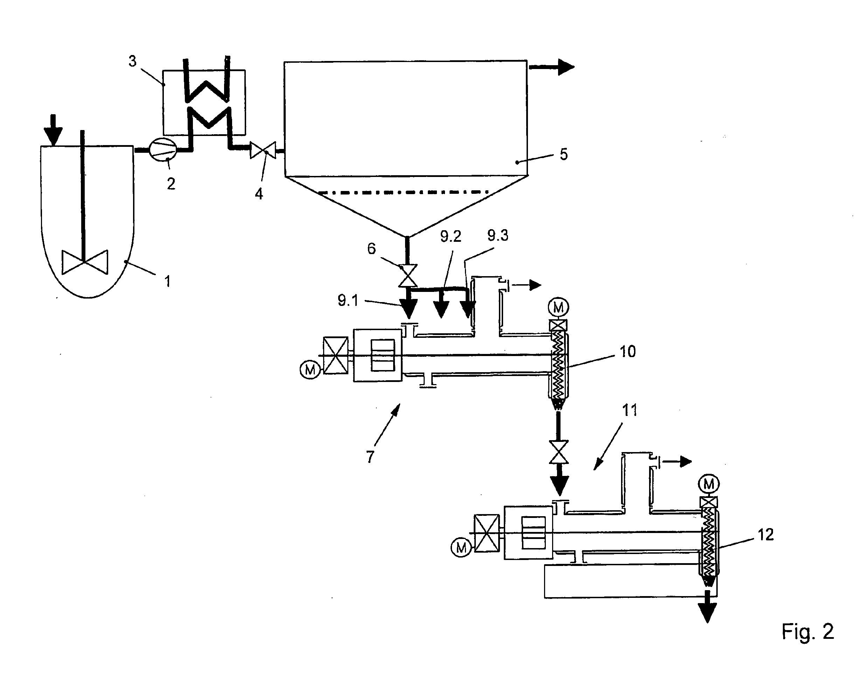

Erfindungsgemäss wird der Niedrigdruckseparator 7 gemäss Fig. 2 durch einen Mischkneter 8 ersetzt. Ein entsprechender Mischkneter ist beispielsweise in der DE 591 06 245.3, DE 592 03 529.8, DE 596 08 462.5, DE 596 00 991.7, DE 500 12 557.0, DE 101 20 391.8, DE 101 50 900.6, DE 101 60 535.8 und DE 195 33 693.3 beschrieben. Dieser Mischkneter kann ein- oder zweiwellig, gleichlaufend oder gegenläufig oder mit unterschiedlichen Drehzahlen betrieben sein.

Die polymerreiche Phase wird dem Mischkneter 8 an mehreren Feedstellen zugeführt, die durch die Bezugszahl 9.1, 9.2 und 9.3 angedeutet sind. Diese Feedstellen sind über die Länge einer oder mehrerer Rühr- bzw. Knetwellen verteilt. Diese Rühr- bzw. Knetwellen, die nicht näher gezeigt, jedoch horizontal oder geneigt angeordnet sind, führen die Polymermasse einem Austrag 10 aktiv zu, so dass auch höhere Viskositäten behandelt werden können.

Aus dem Austrag 10 gelangt das Produkt in einen Finisher 11, der ebenfalls ein horizontal angeordneter Mischkneter sein kann. In diesem Finisher 11 wird die Zuführtemperatur nach dem Drucksprung derart eingestellt, dass die Polymermasse oberhalb des Verfestigungsbereichs gehalten wird. Des weiteren wird im Finisher erfindungsgemäss ein flüssiges Stripmittel an einer oder mehreren Feedstellen zugegeben, so dass bei eingestelltem Druck im Behälterraum das Stripmittel verdampft und so über die Dosiermenge des Stripmittels die Polymermassentemperatur eingestellt wird. Durch Partialdrucksenkung und Verbesserung des Stoffaustausches können die erreichbaren Gehalte an unerwünschten flüchtigen Substanzen signifikant reduziert werden.

Die Polymermasse gelangt dann durch einen weiteren Austrag 12 zu einer nicht näher dargestellten weiteren Verarbeitungsstation.

**Bezugszeichenliste**

| | | | | | |
|---|---|---|---|---|---|
| 1 | Rührkessel | 34 | | 67 | |
| 2 | Pumpe | 35 | | 68 | |
| 3 | Wärmetauscher | 36 | | 69 | |
| 4 | Ventil | 37 | | 70 | |
| 5 | Hochdruckseparator | 38 | | 71 | |
| 6 | Ventil | 39 | | 72 | |
| 7 | Niedrigdruckseparator | 40 | | 73 | |
| 8 | Mischkneter | 41 | | 74 | |
| 9 | Feedstelle | 42 | | 75 | |
| 10 | Austrag | 43 | | 76 | |
| 11 | Finisher | 44 | | 77 | |
| 12 | Austrag | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur thermischen Trennung einer Lösung aus thermoplastischem Polymer und Lösungsmittel, bei dem die Lösung unter Druck oberhalb des kritischen Punktes des Lösungsmittels aufgeheizt und danach in einen Behälter (5) entspannt wird, so dass sich eine polymerreiche Phase und eine polymerarme Phase bildet, wobei die polymerreiche Phase einem zweiten Behälter (8) zugeführt wird, wobei
a) ein Drucksprung beim Eintritt in den zweiten Behälter (8) zu einem thermischen Flash in dem zweiten Behälter (8) führt, wobei der Polymeranteil der schweren Phase auf mindestens 70 %, insbesondere mehr als 80 % steigt, und
b) die resultierende polymerreiche Lösung - insbesondere über zumindest einen Teil der Länge einer Rührwelle verteilt - zugeführt wird, die sich im gleichen Behälterraum befindet und die durch mechanische Knetenergie die Polymermasse aufheizt und dadurch bewirkt, dass der Polymeranteil auf über >70 insbesondere >90% steigt; und
wobei
c) ein Flashbehälter mit einem Mischer ersetzt wird;
d) die geflashte Lösung oder Suspension über die Länge des Kneters auf ein heisseres Bett verteilt und eingeknetet wird, was einer Rückmischung entspricht;
e) dies über eine oder mehrere Feedstellen realisiert wird;
f) ein Produktraum ähnlich wie der ersetzte Flashbehälter unter Überdruck betrieben wird, wobei
g) eine Feedtemperatur so gewählt wird, dass sich ein Produkt im Entgaser nicht verfestigt und damit keine Granulierung des Produktes stattfindet, und wobei
h) ein Flashkneter verwendet wird.

2. Verfahren nach Anspruch 1, **dadurch gekennzeichnet, dass** bei der/den Feedstelle/n eine Rückmischung in dem zweiten Behälter (8) erfolgt.

3. Verfahren nach Anspruch 1 oder 2 **dadurch gekennzeichnet, dass** die Temperatur der Polymermasse durch Einstellung der Drehzahl und/oder des Drehmoments der Rühr- bzw. Knetwelle in dem zweiten Behälter (8) und/oder des Drucks und/oder Kontaktwärme oberhalb des Verfestigungsbereichs gehalten wird.

4. Verfahren nach einem der Ansprüche 1 bis 3 **dadurch gekennzeichnet, dass** die Rühr- bzw. Knetwelle/n die Polymermasse einem Austrag (10) aktiv zuführt, wodurch höhere Viskositäten behandelt werden können.

5. Verfahren nach einem der Ansprüche 1 bis 4 **dadurch gekennzeichnet, dass** in einem nachfolgenden Finisher (11) die Zuführtemperatur nach dem Drucksprung derart eingestellt wird, dass die Polymermasse oberhalb des Verfestigungsbereichs gehalten wird.

6. Verfahren nach Anspruch 5, **dadurch gekennzeichnet, dass** im Finisher (11) ein flüssiges Strippmittel an einer oder mehreren Feedstellen zugegeben wird, so dass bei eingestelltem Druck im Behälterraum das Strippmittel verdampft und so über die Dosiermenge des Strippmittels die Polymermassentemperatur eingestellt wird und durch Partialdrucksenkung und Verbesserung des Stoffaustauschs die erreichbaren Gehalte an unerwünschten flüchtigen Substanzen signifikant reduziert werden.

## Claims

1. A method for the thermal separation of a solution comprising thermoplastic polymer and solvent, in which the solution is heated under pressure to above the critical point of the solvent and then devolatilised in a vessel (5) so that a polymer-rich phase and a polymer-depleted phase form, wherein the polymer-rich phase is supplied to a second vessel (8), wherein
a) a pressure jump on entry into the second vessel (8) leads to a thermal flash in the second vessel (8), the polymer content in the heavy phase rising to at least 70%, in particular more than 80%, and
b) the resulting polymer-rich solution is supplied - in particular distributed over at least part of the length of a stirrer shaft - which is located in the same vessel space and which heats the polymer material by mechanical kneading energy, thus causing the polymer content to rise to over >70, particularly >90%; and
wherein
c) a flash vessel is replaced with a mixer;
d) the flashed solution or suspension is distributed on a hotter bed over the length of the kneader and kneaded in, which corresponds to a back mixing;
e) this is implemented via one or more feed points;
f) a product space is operated under excess pressure similarly to the flash vessel that has been replaced, wherein
g) a feed temperature is selected such that a product does not solidify in the devolatiliser and thus no granulation of the product takes place, and wherein
h) a flash kneader is used.

2. The method according to claim 1, **characterised in that** at the feed point/s a back mixing takes place in the second vessel (8).

3. The method according to claim 1 or 2, **characterised in that** the temperature of the polymer material is maintained above the solidification range by adjustment of the speed and/or torque of the stirrer shaft or kneader shaft in the second vessel (8) and/or of the pressure and/or contact heat.

4. The method according to one of claims 1 to 3, **characterised in that** the stirrer or kneader shaft/s actively supplies the polymer material to a discharge (10), as a result of which the treatment of higher viscosities is possible.

5. The method according to one of claims 1 to 4, **characterised in that** in a subsequent finisher (11), the feed temperature after the pressure jump is adjusted such that the polymer material is maintained above the solidification range.

6. The method according to claim 5, **characterised in that** in the finisher (11), a liquid stripping agent is added at one or more feed points such that, with adjusted pressure in the vessel space, the stripping agent evaporates and thus the temperature of the polymer material is adjusted by means of the metered quantity of the stripping agent, and the achievable contents of undesirable volatile substances are significantly reduced by lowering the partial pressure and improving the mass transfer.

## Revendications

1. Procédé de séparation thermique d'une solution composée d'un polymère thermoplastique et d'un solvant, dans lequel la solution est chauffée sous pression au-dessus du point critique du solvant et ensuite expansée dans un récipient (5), de sorte qu'il se forme une phase riche en polymère et une phase pauvre en polymère, dans lequel la phase riche en polymère est alimentée vers un deuxième récipient (8), dans lequel
a) un saut de pression lors de l'entrée dans le deuxième récipient (8) conduit à une expansion thermique dans le deuxième récipient (8), la part de polymère de la phase lourde augmentant à au moins 70 %, en particulier à plus de 80%, et
b) la solution riche en polymère résultante, en particulier répartie sur au moins une partie de la longueur d'un arbre d'agitation, étant alimentée, laquelle se trouve dans le même espace de récipient et chauffe par des moyens de pétrissage mécaniques la masse de polymère et provoque ainsi que la part de polymère augmente à plus de > 70, en particulier > 90% ; et
dans lequel
c) un réservoir d'expansion est remplacé par un mélangeur;
d) la solution ou suspension expansée est répartie et malaxée sur la longueur du malaxeur, pour obtenir un lit plus chaud, ce qui correspond à un rétromélange ;
e) cela est réalisé par l'intermédiaire d'un ou plusieurs points d'alimentation ;
f) une chambre à produit similaire au récipient d'expansion remplacé fonctionne sous surpression,
g) une température d'alimentation étant choisie de sorte qu'un produit dans le dégazeur ne se solidifie pas et qu'il ne se produise donc pas de granulation du produit, et
h) un pétrisseur à expansion étant utilisé.

2. Procédé selon la revendication 1, **caractérisé par le fait qu'**au ou aux points d'alimentation a lieu un rétromélange dans le deuxième récipient (8).

3. Procédé selon la revendication 1 ou 2, **caractérisé par le fait que** la température de la masse de polymère est maintenue au-dessus de la plage de solidification en réglant la vitesse et/ou le couple de l'arbre d'agitation ou de pétrissage dans le deuxième récipient (8) et/ou la pression et/ou la chaleur de contact.

4. Procédé selon l'une des revendications 1 à 3, **caractérisé par le fait que** le ou les arbres d'agitation ou de pétrissage conduisent la masse de polymère activement vers une décharge (10), d'où peuvent être traitées des viscosités plus élevées.

5. Procédé selon l'une des revendications 1 à 4, **caractérisé par le fait, que** dans un finisseur successif (11), la température d'alimentation est réglée après le saut de pression de sorte que la masse de polymère soit maintenue au-dessus de la plage de solidification.

6. Procédé selon la revendication 5, **caractérisé par le fait que**, dans le finisseur (11), un agent de stripage liquide est ajouté à un ou plusieurs points d'alimentation, de sorte qu'à la pression réglée dans l'espace de récipient s'évapore l'agent de stripage et que par le dosage de l'agent de stripage soit ainsi réglée la température de la masse de polymère et que par abaissement de pression partiel et amélioration de l'échange de matière soient réduites de manière significative les teneurs pouvant être obtenues en substances volatiles non désirées.
